# EUROPEAN PATENT SPECIFICATION

(11) **EP 1 470 854 B1**
(45) Date of publication and mention of the grant of the patent: **30.03.2011**
(21) Application number: 04009163.9
(22) Date of filing: 16.04.2004
(51) Int. Cl.: B01D 67/00, B01D 71/10

(54) **Epoxide-crosslinked, charged cellulosic membrane**
DURCH EPOXID VERNETZTE, ELEKTRISCH GELADENE CELLULOSE-MEMBRAN
MEMBRANE CELLULOSIQUE CHARGEE RETICULEE PAR UN EPOXIDE

(30) Priority: 16.04.2003 US 414980
(43) Date of publication of application: 27.10.2004
(73) Proprietor: MILLIPORE CORPORATION, Billerica Massachusetts 01821 (US)
(72) Inventor: Charkoudian, John, Carlisle Massachusetts 01741 (US)
(74) Representative: Henkel, Feiler & Hänzel

(56) References cited:
- DE-A- 4 418 831
- US-A- 4 839 203
- US-A- 4 888 115

## Description

### Field

This invention relates to an improved ultrafiltration membrane useful for biochemical fluid separations and to a method for the manufacture thereof. More particularly, this invention relates to an epoxide-crosslinked, charged cellulose-based ultrafiltration membrane.

### Background

Porous polymer structures are generally classified according to their effective pore size and/or according to their retentivity, *i.e.,* the sizes of particles unable to pass through the pores of the porous polymer structures. Thus, for example, the structures used as filters are classified as ultrafilters if they retain dissolved matter such as ions, proteins, viruses, or macro molecules, and are classified as microporous structures if they pass dissolved matter and retain only undissolved particles. The dividing line between microporous structures and ultrafilters in terms of pore size is not an absolute, scientifically defined boundary. Regardless, among skilled practitioners (*e.g.*, membranologists), ultrafilters are generally membranes having an average pore size between about 0.005 micrometers and about 0.05 micrometers. In contrast, a microporous structure typically connotes an average pore size between about 0.05 micrometers and about 10 micrometers.

Ultrafiltration membranes can be formed into a variety of shapes including sheets and tubes.

Porous membranes are often classified according to their pore size at their two surfaces, *i.e.,* "isotropic" or "symmetric" when the two surfaces have similar pore sizes and "anisotropic" or "asymmetric" when the two surfaces have different pore sizes.

Porous polymeric membranes are also often classified as either hydrophilic or hydrophobic. When the hydrophilic membranes are brought into contact with water, they will spontaneously "wet", *i.e.,* water will displace the air from the membrane pores without the application of external force. In contrast, a positive pressure is required to push water into the pores of hydrophobic structures and displace air therein.

Ultrafiltration membranes can be formed as composite membranes, *i.e.,* wherein an ultrafiltration layer is secured, deposited, or otherwise provided on a microporous substrate, such as ultrahigh molecular weight polyethylene (UPE).

Due to their small pore size, ultrafiltration membranes are often used to separate molecules on the basis of molecular size. For example, ultrafiltration membranes are used to separate a specific protein from a mixture of other proteins by size exclusion. An ultrafiltration membrane will generally have a permeability sufficient to allow permeation through said membrane of objects less than approximately 0.05 micron and restrict permeation of objects greater in size. When utilizing an ultrafiltration membrane for separating proteins in aqueous solution, it is desirable to use a hydrophilic membrane which does not bind protein so that the solution can be processed and the protein recovered.

Cellulose is a polymeric raw material commonly used in the manufacture of ultrafiltration membranes. Cellulose-based ultrafiltration membranes are often well-regarded for their low protein-binding characteristics - a feature important in many biochemical applications. Unfortunately, cellulose-based ultrafiltration membranes - if not otherwise modified - are also perceived as physically weak and unstable. Much effort has been directed towards improving the physical robustness and durability of cellulose-based membranes. One strategy along this line involves crosslinking the cellulosic polymer of the membrane. While good results are attainable through this strategy, often the improvement in durability comes at the sacrifice of other chemical and/or surface properties.

Much effort has also been directed toward modifying the pore surface of pre-formed membranes. And, it has been generally observed that when macromolecular substances are used in the modification, significant change in pore properties can result. For example, loss of flow can occur, particularly for membranes having small average pore size. Although alternative heteogeneous chemical modification processes can be employed, a complicated reaction scheme is often required, which can result in changes in membrane structure and properties, such as mechanical strength and solubility.

US 4,839,203 discloses semi-permeable membranes prepared by a reaction of cationic groups with nucleophilic groups. These membranes are composite membranes wherein the discriminating layer of the membrane is prepared by reaction of a reactive cationic compound group with a compound bearing a nucleophilic moiety. The reaction product contains covalent bonds formed via charge eliminating reactions.

US 4,888,115 discloses a process for the cross-flow filtration of a liquid comprising circulating the liquid tangential to a charge modified organic polymeric microporous filter membrane.

### Summary

The present invention provides a charge modified synthetic ultraporous membrane comprising a charged porous layer of crosslinked cellulose polymer, supported on a porous substrate the crosslinked polymer being formed from a cellulosic polymer and a crosslinking reagent. The cellulosic polymer has substantial crosslinkable hydroxyl moiety content. The crosslinking reagent is a bi- or multi-functional epoxide capable of reacting with and binding to the polymer's hydroxyl moieties and has the formula X(CH₂)nY, wherein: **n** is an interger from 1 to 5; **X** is H₂COCH or H₂COCHCH₂O; and **Y** is a halogen, H₂COCH, or H₂COCHCH₂O. Surface charge is provided by covalently binding a charged moiety onto a surface of said layer of crosslinked polymer. The porous synthetic membrane has good durability and good protein binding characteristics.

Surface-charge modification can be conducted, in particular, according to either a one-step process or a two-step process.

In the one-step process, a raw cellulose membrane is reacted with a reagent reactive with hydroxyl groups which, upon so reacting with said hydroxyl group, forms either a positively- or negatively-charged ionic group. The reagent and cellulose membrane are reacted under conditions to charge modify the substrate membrane so that the modified membrane has minimal change to its pore structure relative to the unmodified membrane substrate. The one step process has the advantages of minimum reaction times, minimum waste, and minimum changes in pore structure of the cellulose membrane.

In the two-step process, the raw cellulose membrane is first reacted with a diepoxide linking reagent which can effect some cross-linking of the substrate membrane and which, upon reaction with the substrate membrane, produces a moiety that is reactive with a second reagent that, upon reaction with the linking moiety, forms a positively charged or negatively charged ionic group. The reagents and substrate membrane are reacted under conditions to charge modify the substrate membrane so that the modified membrane has ultrafiltration properties similar to the unmodified membrane substrate. The two step process has the advantages of improving the physical and chemical strength of the membrane due to crosslinking and increasing the number of useful modifying chemistries.

The charge modified ultrafiltration membranes of this invention are hydrophilic in that they wet upon contact with water. In addition, the membranes of this invention are characterized by little or no protein binding. Since the membranes of this invention can be positively or negatively charged, they can be utilized to effect ultrafiltration of a wide variety of molecular species dissolved in aqueous solution.

In light of the above, its is a principal objective of the present invention to provide an epoxide-crosslinked surface-charged cellulose membrane having good durability and low protein-binding characteristics.

It is another objective of the present invention to provide a charged porous membrane comprising a substantially hydrophilic crosslinked cellulosic polymer formed from a cellulosic polymer and a crosslinking reagent of the formula 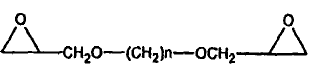 or 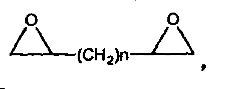 wherein n is a integer from 1 to 5

It is another objective of the present invention to provide an epoxide-crosslinked cellulose membrane, the surface thereof having been modified to provide charged or biologically-active moieties to either enhance the membrane's separation capacity (*cf.,* by providing charge) or enhance its biological functionality (*cf.,* by the provision of the biologically-active moiety).

It is another objective of the present invention to provide an ultrafiltration hydrophilic membrane having a charged surface which retains the ultrafiltration capacity of an unmodified membrane.

It is another objective of the present invention to provide an ultrafiltration hydrophilic membrane having a charged surface, good ultrafiltration capacity, and low protein affinity.

### Detailed Description

The present invention provides a porous synthetic membrane suitable for conducting macromolecular fluid separations (*e.g.*, protein filtration) is described. The ultraporous membrane comprises a crosslinked polymer formed from a cellulosic polymer and a crosslinking reagent. The cellulosic polymer has substantial crosslinkable hydroxyl moiety content. The crosslinking reagent is a bi- or multi-functional epoxide capable of reacting with and binding to the polymer" hydroxyl moieties and has the formula X(CH₂)nY, wherein: **n** is an integer from 1 to 5; **X** is H₂COCH or H₂COCHCH₂O; and **Y** is a halogen, H₂COCH, or H₂COCHCH₂O. The porous synthetic membrane has good durability and good protein binding characteristics.

The charge modified ultrafiltration membranes of this invention are formed from a membrane substrate having a surface formed of a polyhydroxyl polymer having reactive hydroxyl groups. Representative suitable polyhydroxyl polymers include cellulose, polyvinyl alcohol (PVA), polyhydroxyalkyl methacrylates such as polyhydroxyethyl methacrylate, polyhydroxyalkyl acrylates such as polyhydroxyethyl acrylate or the like. The polyhydroxyl polymer surface also can be formed by coating a substrate porous membrane with a polyhydroxyl polymer.

In the one step process, the polyhydroxyl polymer membrane is reacted with a reagent that combines with hydroxyl groups of the polymer under conditions to form a positively or negatively charged ionic group. Representative suitable reagents for forming a positively charged ionic group include compounds of the formulae:

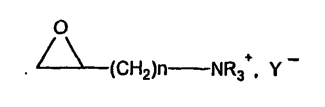

X―(CH₂)n―NR₃⁺, Y⁻

wherein X can be halogen such as chlorine or bromine, Y is an anion, the Rs can be the same or different and are alkyl from 1 to 5 carbon atoms and n is 0 or an integer of 1 to 5. It is preferred to utilize reagents where n is 1 since these reagents minimize change in hydrophilicity of the substrate membrane. Representative suitable reagents include glycidyl trimethylammonium chloride, (2-chloroethyl) trimethylammonium chloride and (3-bromopropyl) trimethylammonium chloride or the like.

Representative suitable reagents for forming a negatively charged ionic group include compounds of the formula X(CH₂)ₙA or alkali metal salts thereof, wherein n is an integer of 1 to 5, X is halogen and A is carboxyl or sulfonate. It is preferred to utilize reagents wherein n is 1 since these reagents minimize change in hydrophilicity of the substrate membrane. Representative suitable reagents include sodium chloroacetate, 3- chloropropionic acid, haloalkyl acids, 2- chloroethyl sulfonate or the like.

In the one-step process, reaction is effected under the conditions of time temperature, pH and reagent concentration in order to retain the ultrafiltration properties of the substrate membrane and to form the charged membrane. Higher temperatures, longer reaction times and/or higher reagent concentrations promote increased membrane substrate modification. Therefore, these conditions are balanced to obtain the desired membrane modification while retaining the ability of the modified membrane to function as an ultrafiltration membrane. For example, reagent concentrations can range from about 1 to 40 % concentration. Reaction times can vary from about 1 minute to about 24 hours. Reaction temperatures can range from about 25°C up to about the boiling point of the reagent. Reaction is effected at a pH between about 9 and about 14.5.

In the two-step process, the polyhydroxyl polymer membrane is reacted in a first step with an epoxy reagent that binds to the hydroxyl groups of the polymer under conditions that effects cross-linking of the polymer and effects the formation of a moiety that is reactive with a second reagent that produces an ionic group upon reaction with the second reagent. In the second step, the epoxy-modified polymer is reacted with the second reagent. Epoxy reagents that are reactive with the hydroxyl groups of the polyhydroxyl polymer may have the formulae: 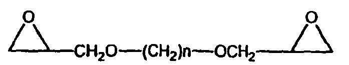 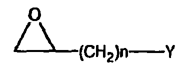 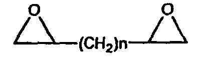 wherein Y halogen and n is an integer of 1 to 5. Representative suitable epoxy reagents include epichlorohydrin, butanedioldiglycidyl ether, ethyleneglycoldiglycidyl ether or butadiene diepoxide.

Upon reaction with the epoxy reagent, the hydroxyl groups of the polyhydroxyl polymer may remain unreacted, reacted with the epoxy reagent to crosslink the polymer or reacted with the epoxy reagent to leave residual epoxy groups. The second reagent is utilized to provide the modifying moiety to the polymer such as a positive or negative charge or the biologically active moiety

In the two-step process, suitable second reagents for forming charged ultrafiltration membranes include the reagents set forth above for the one step process. These reagents react directly with the unreacted hydroxyl groups of the polymer.

In the two-step process, suitable second reagents for forming positively charged ultrafiltration membranes include reagents having a nucleophilic group including monoamines, diamines, compounds having a sulfhydryl group or an alkoxide group. Representative suitable reagents having a nucleophilic group include trimethylamine, ethylenediamine, N,N dialkylalkylenediamines such as N,N dimethylethylenediamine or the like.

In the two-step process, representative suitable reaction conditions for the second reaction are those set forth above for the one step process in order to retain ultrafiltration properties of the substrate membrane and to form the modified membrane.

By utilizing the processes set forth above, a substrate membrane can be modified to include both positive and negative charges.

### Examples

The following examples, while illustrating further the invention, are not intended to limit the same.

### Example 1

The following procedure demonstrates the formation of an epoxide-crosslinked, positively-charged cellulose ultrafiltration membrane.

A 16x8cm prewet piece of a composite ultrafiltration membrane comprising regenerated cellulose having a nominal molecular weight limit (NMWL) of 100,000 (*i.e.,* 100KD), provided on an ultrahigh molecular weight polyethylene microporous membrane, available from Millipore Corporation (Bedford, Massachusetts) under the catalog designation "PLCHK", is placed in a vessel charged with 29 g of 2M NaOH, 8.9 epichlorohydrin, and 60 mg of sodium borohydride. The vessel is tightly sealed, then placed in a hybridizer at 50°C for 2 hours. The resultant epoxidized product is washed twice with ethanol, twice with water, and stored in water.

The electrophilic epoxidized surface is then treated with a nucleophilic amine reagent to provide a positive charge on the cross-linked cellulose membrane.

In particular, a solution comprising 13 g of N,N dimethylethylenediamine in 58 g of 0.2M sodium bicarbonate is used to replace the water in the vessel. The membrane is treated with this solution in the hybridizer for 2 hours at 50°C. Following thorough washing with water, the membrane is stored in azide preserved water.

The membrane was tested to determine its charge by infrared and dye staining. Porosity of the formed membrane was evaluated by obtaining flux and dextran measurements. Results are shown in the following table:

**Table 1**

| | **Control Unmodified** | **Test Epoxidized** | **Test Amine Surface** |
|---|---|---|---|
| Flux, gsfd/psi | 43.6 | 11.2 | 9.1 |
| Magenta Density | 0.05 | 0.05 | 1.95 |

### Example 2

Ethylenediamine was reacted with four samples of epoxidized membrane prepared according to the procedure of Example 1 for 0.25, 0.50, 0.75 and 1.0 hours, respectively. The resulting membranes were reacted with a solution of 13 grams of ethylenediamine and 53 grams of sodium bicarbonate at 50°C for 1 hour. The membranes were stained with Ponceau S dye to reveal the magnitude of positively charged surface. As shown in the following table, the magnitude of positive charge increases with time of epoxidization:

**Table 2**

| **Time (hours)** | **Magenta Density (ODU)** |
|---|---|
| 0 | 0.01 |
| 0.25 | 1.54 |
| 0.50 | 1.71 |
| 0.75 | 2.08 |
| 1.00 | 2.51 |

### Example 3

The starting membrane used in Example 1 was epoxidized for 1 hour at 50°C, then reacted with ethylenediamine at 50°C for 1 hour.

The R90 and R95 values for each sample was obtained and are represented in the following table:

**Table 3**

| **Membrane** | **R90** | **R95** |
|---|---|---|
| Control Sample | 49,475 and 45,598 | 63,587 and 58,713 |
| NaOH Sample | 41,548 and 40,323 | 53,886 and 52,502 |
| Epoxidized Sample | 26,737 | 34,643 |
| Epoxidized/Derivatized | 32,103 and 35,047 | 44,360 and 48,866 |
| Sample | | |

The R90 value is the molecular weight of molecules wherein 90% are excluded by the membrane. The R95 value is the molecular weight of molecules wherein 95% are excluded. Where two values are shown, two different filtration runs were conducted.

As shown in Table 3, the modified membrane of this invention was capable of ultrafiltration.

### Example 4

Negatively charged cellulose membranes were made using either unmodified PLCHK composites or epoxidized PLCHK composites. The former method (METHOD A) results in a membrane that is not crosslinked. The latter method (METHOD B) results in a crosslinked, derivatized product.

### METHOD A

An 8x4cm prewet sheet of PLCHK membrane is placed in a vessel charged with 15 g of 2M NaOH and 4.5 g of sodium chloroacetate. The vessel is sealed tightly, then placed in a hybridizer at 50°C for 2.5 hours. The product was washed with copious amounts of water.

This process was repeated at varying degrees of completion to obtain sample intermediates of the product for evaluation. Hence, samples of the starting material ("Control Sample"), the epoxidized intermediate ("Epoxidized Sample") and the final epoxidized, derivatized product ("Epoxidized/Derivatized Sample") were obtained. A sample of the raw membrane reacted with 2M NaOH only for 1 hours at 50°C ("NaOH Sample") was also obtained. A sample was stained with methylene blue -- a positively charged dye used to stain negative surfaces. The results are displayed in Table 4.

Additional PLCHK membranes were modified using the same procedure but at a lower electrophile (*i.e.,* chloroacetate anion) concentration and at a lower temperature and for a shorter time, as set forth in the table below.

A range of negative charge densities on the cellulose membranes was obtained. All membranes were tested for cyan density resultant of methylene blue staining.

**Table 4**

| **Membrane** | **Na Chloroacetate** **(g)** | **NaOH** **(g)** | **Temperature** **(°C)** | **Time** **(Hours)** | **Cyan** **Density** |
|---|---|---|---|---|---|
| Unmodified | 0 | 0 | 0 | 0 | 0.14 |
| Unmodified | 4.5 | 15g of 1M | 50 | 2.5 | 1.50 |
| Unmodified | 4.5 | 15g of 2M | 50 | 2.5 | 1.64 |
| Unmodified | 2.0 | 18g of 1M | 30 | 0.5 | 0.93 |
| Unmodified | 2.0 | 18g of 1M | 30 | 1.0 | 1.09 |
| Epoxidized | 0 | 0 | 0 | 0 | 0.16 |
| Epoxidized | 4.5 | 15g of 2M | 30 | 1.0 | 0.65 |

### METHOD B

A sheet of epichlorohydrin crosslinked PLCHK membrane was treated with 15 g of 2 M NaOH, 4.5 g sodium chloroacetate for 1.0 hour at 30°C. The sheet was washed, then stained for evaluation. Results of the evaluation are shown in the following table.

As shown in the table, the above-procedures yield a range of negative charge densities on cellulose UF membranes. Positive indication of substantive charging of an epoxidized membrane by treatment with sodium chloracetate is apparent.

### Example 5

The same procedure used in Example 4 is employed with the exception of the reagent and conditions used to impart negative charge. Instead of sodium chloroacetate, a Michael addition reaction is performed by the reaction of acrylamidomethylpropanesulfonic acid sodium salt in 0.5M NaOH at 50 degrees C for 5 hours to negatively charge the cellulose.

### Example 6

### One Step Method With Glycidyl Reagents

Glycidyl reagents having epoxide groups and groups capable of possessing charge can be reacted directly with hydroxyl polymers. In this example, a glycidyl quartenary compound is reacted with a regenerated cellulose membrane to give a positively charged cellulose surface. The analogous reaction with a glycidyl acid gives a negatively charged membrane.

7 grams of glycidyl trim ethylammonium chloride are dissolved in 26 grams of 2M NaOH to give a 21% solution. A 2x4cm sheet of PLCHK membrane is treated with this solution at 40°C for 2 hours. The membrane is thoroughly washed with water and treated with Ponceau S dye to reveal a positively charged surface. The magenta optical density was measured at 2.18 optical density units, indicative of a high positive surface charge density.

The resultant positively-charged product is characterized by the single methylene group separations between the hydroxyl-bearing carbons and the quaternary moieties on the cellulosic polymer. This minimizes the number of hydrophobic carbons added to the cellulose surface during covalent bonding of the quaternary nitrogen group.

### Two-Step Process With Ammonia Based Reagent

Ammonium-based reagents such as trimethylamine will react with epoxide-bearing surfaces to give amine surfaces which will either have a quaternary nitrogen (*i.e.,* in the case of the reactions of trialkylamines) or amines which gain a positive charge upon protonation in water. Use of the di-substituted ammonia based molecules, wherein each of the substitutions contain negative charge, will impart a net negative charge to the epoxidized surface.

A 20% solution of trimethylamine in water is used to treat a 2x4cm sheet of epoxidized regenerated cellulose membrane. This epoxidized surface is produced by the procedure of Example 1. The membrane is reacted for 2 hours at 40° C. After thorough washing, the membrane is stained with Ponceau S. The magenta optical density was recorded at 1.54, indicative of a substantial positive charge. The procedure yields a comparatively low number of the hydrophobic carbons introduced during the covalent bonding of the charge-bearing nitrogen.

### Example 7

A solution of cellulose acetate is coated on a microporous, ultrahigh molecular weight polyethylene membrane that had been previously hydrophilized. The composite sheet is then hydrolyzed, yielding a two-layer structure comprising regenerated cellulose supported on a hydrophilic membrane substrate. This membrane is essentially the same as the aforementioned PLCHK membrane and has a nominal molecular weight limit (NMWL) of 100,000 daltons.

The composite membrane is then crosslinked using the difunctional diepoxide reagent, BUDGE. BUDGE is 1,4 butanedioldiglycidyl ether and reacts with -OH groups on the cellulose backbone. The extent of crosslinking and the resulting structure of the crosslinked network is controlled by the concentration of BUDGE, pH, time and temperature. In this example, 200 g of a solution of 20% BUDGE, 40% N-methylpyrrolidone, and 40% 0.4M NaOH (w/w) is used to crosslink a 38 X 5.25 inch she of the composite membrane in a continuously agitated vessel for 16 hours at 40°C. The resultant epoxidized membrane is washed, first with methanol then by water.

To ascertain the completeness of reaction and the lack of residual epoxide groups, the XL membrane is treated with a solution of 13 grams N,N dimethylethylenediamine (DMED) in 58 grams of 0.2M NaHC03. Any residual epoxide that result from only one end of the difunctional epoxide being attached to the cellulose backbone will react with the amine to give a positively charged membrane. The magnitude of the positive charge is measured by the magenta density that results from staining the membrane with a negatively charged dye, Ponceau S. For the epoxidized membrane here, the magenta density was 0.02 optical density units, which essentially indicates that the membrane is uncharged.

The epoxidized membrane is positively charged by reaction with glycidyltrimethylammonium chloride (GTMAC). The magnitude of the positive charge is controlled by the concentration of (GTMAC) and hydroxide, as well as time and temperature. In this example, a solution of 20 g of 70% aqueous GTMAC in 80 g of 0.1M NaOH is used to treat the crosslinked membrane for 1.75 hours at room temperature. The resultant charged, crosslinked membrane is washed with water. The magenta density was 1.5 optical density units, which indicates that the membrane is now charged.

Provided with such charge, the inventive epoxide-crosslinked membrane is capable of enhanced retention of positively charge molecules at higher relative process flux. This can lead to substantially lower process costs in the conduct of certain membrane-based biochemical separations.

The following table shows that when the membrane is crosslinked, it becomes "tighter" as manifested by its decrease in flux and lower R90.

**Table 5**

| | **FLUX gsfd/psi** | **R90 kD** |
|---|---|---|
| PLC*HK | 33.5 | 71.9 |
| PLC*HK-XL | 25.3 | 63.4 |
| PLC*HK-XL-C | 21.2 | 52.8 |

R90 is a measure of the NMWL. When converted to the charged form, the pores will have GTMAC-derived molecules attached ,to them, and a further decrease in R90 and flux will be observed. The charged, epoxidized membrane retains positively-charged molecules with substantially the same efficiency as a membrane having flux values of 2-4 gsfd/psi and R90 values of 4-7 kD. However, the charged, epoxidized membrane has a flux of 21.2, which is about 10 times greater.

### Example 8

In Example 1, the concentrations, time, and temperature employed were such that essentially no residual epoxides were detected at the end of the process. Essentially all of the epoxide groups reacted with the -OH groups on the cellulose or reacted with the hydroxide from the NaOH. By increasing or decreasing the concentration of difunctional epoxide and/or hydroxide, time, and temperature a full range of combinations of crosslinking and residual epoxide can be obtained.

These membranes can possess a range of electrophilic epoxide content and crosslinking, and can serve as excellent affinity membranes or as precursors to excellent affinity membranes. By reacting the epoxide content with functional nucleophiles, a wide range of functionality on cellulose becomes accessible.

For this example, the basic process of Example 6 was employed. However, instead of using 0.4M NaOH, 0.1 M NaOH was used. And, instead of reacting for 16 hours, the reaction was conducted for only 8 hours. This procedure leaves substantial residual epoxide. The DMED reaction serves to not only reveal this content and render the surface positively charged, but also demonstrates the ability to attach functionality via reaction with a nucleophile.

Reaction of this membrane with DMED according to Example 6 gives a membrane, which when stained with Ponceau S, has a magenta density of 1.4. The primary amine of the DMED -- the N,N dimethyl nitrogen being sterically hindered -- reacts with the residual epoxides and becomes attached to the cellulose. The cellulose becomes positively charged because two amine groups are now attached to the cellulose.

It is believed that if a protein with amine functions is reacted with the membrane instead of DMED, the protein will attach. It is believed that any functional molecule with a nucleophilic site different from the desired surface functionality could be attached to give a functional surface.

### Example 9

The process of Example 1 was conducted. However, a range of positive charge was produced in the resultant membranes using epichlorohydrin as a crosslinking reagent with reaction times adjusted to vary the degree of epoxide crosslinking. Reaction of residual epoxide with DMED was employed to render the surfaces of resultant membranes positive in charge.

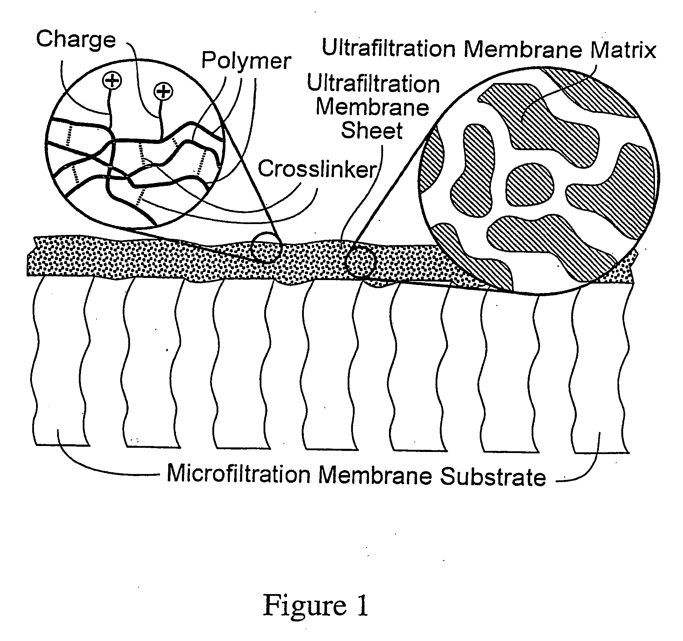

## Claims

1. A charge-modified ultraporous synthetic membrane comprising a porous layer of crosslinked cellulose polymer supported on a porous polymeric substrate, wherein (a) the crosslinked cellulose polymer is formed from a cellulosic polymer and a crosslinking reagent, the cellulosic polymer having crosslinkable hydroxyl moieties, and the crosslinking reagent capable of binding to said hydroxyl moieties and having the formula X(CH₂)nY, wherein n is an integer from 1 to 5, X is H₂COCH or H₂COCHCH₂O, and Y is a halogen, H₂COCH, or H₂COCHCH₂O; and (b) a charged moiety is covalently bound onto a surface of said layer of crosslinked cellulose polymer.

2. The charge-modified ultraporous synthetic membrane of claim 1, wherein said crosslinking reagent has the formula:

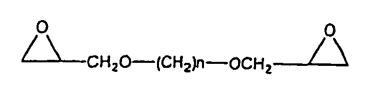

3. The charge-modified ultraporous synthetic membrane of claim 1, wherein said crosslinking reagent has the formula:

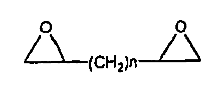

4. The charge-modified ultraporous synthetic membrane according to any one of claims 1 to 3, wherein substantially less than all crosslinkable hydroxyl moieties are bound with said crosslinking reagent.

5. The charge-modified ultraporous synthetic membrane according to any one of claims 1 to 4, wherein the layer of crosslinked polymer has a porosity sufficient to allow permeation through said layer of objects less than approximately 1 micron and restrict permeation of objects greater in size.

6. The charge-modified ultraporous synthetic membrane according to any one of claims 1 to 5, wherein the porosity of said porous polymeric substrate being less than the porosity of said layer of crosslinked polymer.

7. The charge-modified ultraporous synthetic membrane according to any one of claims 1 to 6, wherein said charged moiety is a negatively charged moiety.

8. The charge-modified ultraporous synthetic membrane according to any one of claims 1 to 6, wherein said charged moiety is a positively charged moiety.

## Patentansprüche

1. Ladungsmodifizierte ultraporige synthetische Membran, die eine auf einem porenhaltigen Polymersubstrat aufliegende porenhaltige Schicht eines vernetzten Cellulosepolymers umfasst, wobei (a) das vernetzte Cellulosepolymer aus einem Cellulosepolymer und einem Vernetzungsreagens gebildet ist, wobei das Cellulosepolymer vernetzbare Hydroxyleinheiten aufweist und das Vernetzungsreagens an die Hydroxyleinheiten binden kann und die Formel X(CH₂)nY aufweist, wobei n für eine ganze Zahl von 1 bis 5 steht, X für H₂COCH oder H₂COCHCH₂O steht und Y für ein Halogen, H₂COCH oder H₂COCHCH₂O steht; und (b) eine geladene Einheit kovalent an eine Oberfläche der Schicht eines vernetzten Cellulosepolymers gebunden ist.

2. Ladungsmodifizierte ultraporige synthetische Membran nach Anspruch 1, wobei das Vernetzungsreagens die folgende Formel aufweist:

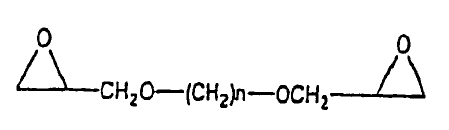

3. Ladungsmodifizierte ultraporige synthetische Membran nach Anspruch 1, wobei das Vernetzungsreagens die folgende Formel aufweist:

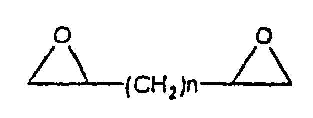

4. Ladungsmodifizierte ultraporige synthetische Membran nach einem der Ansprüche 1 bis 3, wobei in einem wesentlichen Ausmaß weniger als alle vernetzbaren Hydroxyleinheiten mit dem Vernetzungsreagens verbunden sind.

5. Ladungsmodifizierte ultraporige synthetische Membran nach einem der Ansprüche 1 bis 4, wobei die Schicht eines vernetzten Polymers eine derart ausreichende Porosität aufweist, dass die Permeation von Objekten einer geringeren Größe als etwa 1 µm durch die Schicht möglich ist und die Permeation von Objekten einer größeren Größe eingeschränkt ist.

6. Ladungsmodifizierte ultraporige synthetische Membran nach einem der Ansprüche 1 bis 5, wobei die Porosität des porösen Polymersubstrats geringer als die Porosität der Schicht eines vernetzten Polymers ist.

7. Ladungsmodifizierte ultraporige synthetische Membran nach einem der Ansprüche 1 bis 6, wobei die geladene Einheit eine negativ geladene Einheit ist.

8. Ladungsmodifizierte ultraporige synthetische Membran nach einem der Ansprüche 1 bis 6, wobei die geladene Einheit eine positiv geladene Einheit ist.

## Revendications

1. Membrane synthétique ultraporeuse à charge modifiée, comprenant une couche poreuse d'un polymère de cellulose réticulé sur un support consistant en substrat polymère poreux, dans laquelle (a) le polymère de cellulose réticulé est formé à partir d'un polymère cellulosique et d'un réactif de réticulation, le polymère cellulosique comprenant des groupements hydroxyle réticulables, et le réactif de réticulation étant capable de se lier auxdits groupements hydroxyle et répondant à la formule X(CH₂)ₙY, dans laquelle n représente un nombre entier de 1 à 5, X représente un groupe HC₂COCH ou H₂COCHCH₂O, et Y représente un groupe halogéno, H₂COCH, ou H₂COCHCH₂O ; et (b) un groupement chargé est lié par covalence sur une surface de ladite couche de polymère de cellulose réticulé.

2. Membrane synthétique ultraporeuse à charge modifiée, suivant la revendication 1, dans laquelle ledit réactif de réticulation répond à la formule :

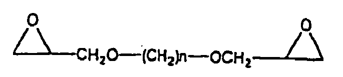

3. Membrane synthétique ultraporeuse à charge modifiée, suivant la revendication 1, dans laquelle ledit réactif de réticulation répond à la formule :

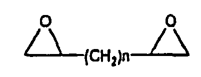

4. Membrane synthétique ultraporeuse à charge modifiée, suivant l'une quelconque des revendications 1 à 3, dans laquelle une quantité substantiellement inférieure à la totalité des groupements hydroxyle réticulables est liée avec ledit réactif de réticulation.

5. Membrane synthétique ultraporeuse à charge modifiée, suivant l'une quelconque des revendications 1 à 4, dans laquelle la couche de polymère réticulé a une porosité suffisante pour permettre la perméation à travers ladite couche d'objets de moins d'approximativement 1 micromètre et restreindre la perméation d'objets de plus grandes dimensions.

6. Membrane synthétique ultraporeuse à charge modifiée, suivant l'une quelconque des revendications 1 à 5, dans laquelle la porosité dudit substrat polymère poreux est inférieure à la porosité de ladite couche de polymère réticulé.

7. Membrane synthétique ultraporeuse à charge modifiée, suivant l'une quelconque des revendications 1 à 6, dans laquelle ledit groupement chargé est un groupement chargé négativement.

8. Membrane synthétique ultraporeuse à charge modifiée, suivant l'une quelconque des revendications 1 à 6, dans laquelle ledit groupement chargé est un groupement chargé positivement.
